# EUROPÄISCHE PATENTANMELDUNG

(11) **EP 1 275 856 A2**
(43) Veröffentlichungstag der Anmeldung: **15.01.2003**
(21) Anmeldenummer: 02014124.8
(22) Anmeldetag: 25.06.2002
(51) Int. Cl.: F16B 5/00

(54) **Vorrichtung zum Verbinden wenigstens zweier Werkstücke**

(30) Priorität: 27.06.2001 DE 20110672 U
(71) Anmelder: Baun, Joachim, 72525 Münsingen / Trailfingen (DE)
(72) Erfinder: Baun, Joachim, 72525 Münsingen / Trailfingen (DE)
(74) Vertreter: Ruckh, Rainer Gerhard, Dr.

(57) **Zusammenfassung**

Die Erfindung betrifft eine Vorrichtung zum Verbinden wenigstens zweier Werkstücke (1a, 1b). Die Vorrichtung weist ein Verbindungselement (2), wenigstens eine Zugzunge (5), welche mit ihrem einen Ende beweglich mit dem Verbindungselement (2) verbunden ist, und wenigstens ein mit der Zugzunge (5) in Wirkverbindung stehendes Befestigungsmittel auf. Das Verbindungselement (2) ist auf aneinander anschließende Grenzflächen der Werkstücke (1a, 1b) aufsetzbar, so dass bei einem am ersten Werkstück (1a) fixierten ersten Teil des Verbindungselementes (2) das freie Ende der Zugzunge (5), welches von dem auf dem zweiten Werkstück (1b) aufliegenden Teil des Verbindungselementes (2) hervorsteht, durch Fixieren des Befestigungsmittels am zweiten Werkstück (1b) in Richtung des Verbindungselementes (2) gedrückt wird, wodurch das zweite Werkstück (1b) gegen das erste Werkstück (1a) gepresst wird und/oder bezüglich diesem ausgerichtet wird.

## Beschreibung

Die Erfindung betrifft eine Vorrichtung zum Verbinden wenigstens zweier Werkstücke.

Derartige Werkstücke bestehen vorzugsweise aus Holz oder auch zumindest teilweise aus Kunststoff und können insbesondere von Balken, Platten oder dergleichen gebildet sein.

Prinzipiell werden derartige Werkstücke vorzugsweise bei Schreiner- und Zimmerarbeiten eingesetzt und zur Montage von entsprechenden Endprodukten verwendet.

Dabei müssen vor der Bearbeitung derartiger Werkstücke diese oftmals zunächst gegeneinander ausgerichtet und dann fixiert werden.

Zur Fixierung zweier Werkstücke, insbesondere Balken und Platten werden typischerweise Spannvorrichtungen eingesetzt. Dabei ist es notwendig, die Werkstücke zunächst mit der erforderlichen Genauigkeit auszurichten um sie dann mittels geeigneter Spannwerkzeuge zu verspannen.

Abgesehen davon, dass sich bei derartigen Systemen die Ausrichtung der Werkstücke als schwierig und entsprechend zeitaufwendig erweist, ist auch der Aufwand an benötigten Werkzeugen unerwünscht hoch.

Um mittels Spannvorrichtungen beispielsweise zwei Balken oder Platten mit einer hohen Genauigkeit auszurichten und dann zu verspannen, müssen typischerweise in beide Werkstücke zunächst Nuten eingefräst werden, um dann in diese ein geeignetes Formteil einzuführen.

Der Erfindung liegt die Aufgabe zugrunde eine Vorrichtung der eingangs genannten Art so auszubilden, dass eine einfache, schnelle und passgenaue Verbindung zweier Werkstücke ermöglicht wird.

Zur Lösung dieser Aufgabe sind die Merkmale der Ansprüche 1 und 25 vorgesehen. Vorteilhafte Ausführungsformen und zweckmäßige Weiterbildungen der Erfindung sind in den Unteransprüchen beschrieben.

Die erfindungsgemäße Vorrichtung zum Verbinden wenigstens zweier Werkstücke weist gemäß einer ersten Ausgestaltung ein Verbindungselement auf, die mit wenigstens einer Zugzunge an ihrem einen Ende beweglich mit dem Verbindungselement verbunden ist. Die erfindungsgemäße Vorrichtung weist weiterhin ein mit der Zugzunge in Wirkverbindung stehendes Befestigungsmittel auf. Das Verbindungselement ist auf aneinander anschließende Grenzflächen der Werkstücke aufsetzbar. Bei einem am ersten Werkstück fixierten ersten Teil des Verbindungselementes wird das freie Ende der Zugzunge, welches von dem auf dem zweiten Werkstück aufliegenden Teil des Verbindungselementes hervorsteht durch Fixieren des Befestigungsmittels am zweiten Werkstück in Richtung des Verbindungselementes gedrückt, wodurch das zweite Werkstück gegen das erste Werkstück gepresst wird und/oder bezüglich diesem ausgerichtet wird.

Die erfindungsgemäße Vorrichtung bildet somit eine Pressvorrichtung mittels dem zwei Werkstücke schnell, zuverlässig und passgenau verbunden werden. Zudem ist bei Betätigen der Vorrichtung auch ein Ausrichten der Werkstücke zueinander möglich. Die erfindungsgemäße Vorrichtung ist kostengünstig herstellbar und insbesondere einfach bedienbar.

Zur Herstellung der Verbindung zweier Werkstücke wird das Verbindungselement auf diese aufgelegt. Ein erster Teil des Verbindungselementes wird beispielsweise durch Verschrauben an dem ersten Werkstück fixiert.

Das zweite Werkstück wird vorzugsweise an dem zweiten Teil des Verbindungselementes vorfixiert. Hierzu weist das Verbindungselement vorzugsweise Langlöcher auf, welche von Befestigungsmitteln durchsetzt werden und welche in das zweite Werkstück greifen. Dabei bleibt das zweite Werkstück relativ zum Verbindungselement zumindest noch geringfügig verschiebbar.

In dieser Position der Werkstücke steht die oder wenigstens eine Zugzunge von der Oberseite des zweiten Teils des Verbindungselementes hervor.

Die Zugzunge wird mittels eines Befestigungsmittels in Richtung des Verbindungselementes gedrückt. Vorzugsweise ist das Befestigungsmittel von einer Schraube oder einem Nagel gebildet. Durch Einführen des Befestigungsmittels in das zweite Werkstück wird die Zugzunge auf dieses Werkstück gedrückt.

Die Zugzunge auf dem Verbindungselement ist dabei derart orientiert, dass durch das Ausrichten der Zugzunge das zweite Werkstück gegen das erste Werkstück gepresst wird und/oder bezüglich diesem ausgerichtet wird.

In einer vorteilhaften Ausführungsform der Erfindung können zum Anpressen der Werkstücke und zu deren Ausrichtung separate Zugzungen verwendet werden, die in geeigneter Form auf dem Verbindungselement orientiert sind.

Gemäß einer zweiten Ausgestaltung der Erfindung ist das Verbindungselement von einem Balkenschuh gebildet. Die Ausrichtung der mit dem Balkenschuh aneinander zu fixierenden Werkstücke erfolgt mit einem Zugelement, welches bevorzugt als Zugzunge ausgebildet ist.

Das Zugelement wird bevorzugt an einer Lasche am Balkenschuh eingehängt. Der Vorteil hierbei besteht darin, dass die Balkenschuhe bis auf die Lasche keine spezifischen Anpassungen zur Aufnahme des Zugelements aufweisen müssen. Damit bilden das Zugelement und der Balkenschuh eine einfach und kostengünstig handhabbare modulare Einheit.

Die Erfindung wird im Nachstehenden anhand der Zeichnungen erläutert. Es zeigen:
- Figur 1:: Draufsicht auf ein erstes Ausführungsbeispiel der erfindungsgemäßen Vorrichtung.
- Figur 2:: Seitenansicht der Vorrichtung gemäß Figur 1.
- Figur 3:: Draufsicht auf ein zweites Ausführungsbeispiel der erfindungsgemäßen Vorrichtung.
- Figur 4:: Seitenansicht der Vorrichtung gemäß Figur 3.
- Figur 5:: Drittes Ausführungsbeispiel der erfindungsgemäßen Vorrichtung.
- Figur 6:: Viertes Ausführungsbeispiel der erfindungsgemäßen Vorrichtung.
- Figur 7:: Fünftes Ausführungsbeispiel der erfindungsgemäßen Vorrichtung.
- Figur 8:: Sechstes Ausführungsbeispiel der erfindungsgemäßen Vorrichtung.
- Figur 9:: Schematische Darstellung eines Zugelements für die Vorrichtung gemäß Figur 8.

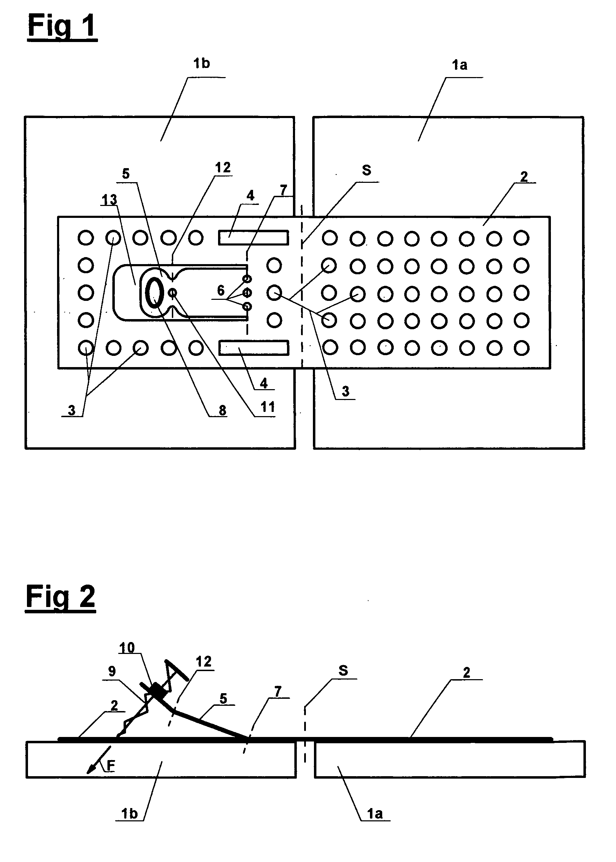

Die Figuren 1 und 2 zeigen ein erstes Ausführungsbeispiel der erfindungsgemäßen Vorrichtung.

Die Vorrichtung dient zur Verbindung zweier Werkstücke 1a, 1b, die vorzugsweise aus Holz bestehen. Die Werkstücke 1a, 1b können alternativ zumindest teilweise auch aus anderen Werkstoffen wie zum Beispiel Kunststoff bestehen. Insbesondere können die Werkstücke 1a, 1b von Platten oder Balken gebildet sein.

Die erfindungsgemäße Vorrichtung dient zum Verbindung der Werkstücke 1a, 1b, wobei die Verbindung durch Zusammenpressen der Werkstücke 1a, 1b erfolgt. Alternativ oder zusätzlich kann die Vorrichtung auch zum gegenseitigen Ausrichten der Werkstücke 1a, 1b eingesetzt werden.

Die in den Figuren 1 und 2 dargestellte Vorrichtung zum Verbinden zweier Werkstücke 1a, 1b weist ein Verbindungselement 2 auf. Das Verbindungselement 2 ist im vorliegenden Fall in Form einer Platte ausgebildet, welche eine rechteckige Kontur und eine jeweils ebene Oberseite und Unterseite aufweist. Alternativ kann das Verbindungselement 2 von einem Winkel, einem Balkenschuh oder dergleichen gebildet sein.

Das Verbindungselement 2 besteht vorzugsweise aus einem Metallteil und besonders vorteilhaft aus einem Blechstanzteil. Das Verbindungselement 2 ist durch eine Symmetrieachse S in zwei flächengleiche rechteckige Teile unterteilt. Der in der Figur 1 zur rechten Seite an die Symmetrieachse S anschließende Teil des Verbindungselementes 2 ist von einer vorgegebenen Anzahl von Löchern 3 durchsetzt. Die Löcher 3 sind jeweils kreisförmig ausgebildet und weisen identische Durchmesser auf. Zudem sind die Löcher 3 äquidistant angeordnet und gleichmäßig über die gesamte Fläche dieses Teils des Verbindungselementes 2 verteilt. Anstelle der Löcher 3 können auch Schlitze vorgesehen sein.

Dieselben Löcher 3 sind auch in dem zweiten, zur linken Seite an die Symmetrieachse S anschließenden Teil des Verbindungselementes 2 vorgesehen. Jedoch sind dort nur im Randbereich des Verbindungselementes 2 derartige Löcher 3 vorgesehen.

Weiterhin sind in diesem Teil des Verbindungselementes 2 zwei Langlöcher 4 vorgesehen, welche im Randbereich des Verbindungselementes 2 symmetrisch zu deren Längsachse angeordnet sind. Die Längsachsen der Langlöcher 4 verlaufen in Längsrichtung des Verbindungselementes 2 und senkrecht zur Symmetrieachse S.

Weiterhin ist in diesem Teil des Verbindungselementes 2 eine Zugzunge 5 vorgesehen, welche an dem Grundkörper des Verbindungselementes 2 beweglich gelagert ist. Die Längsachse der Zugzunge 5 verläuft in Längsrichtung des Verbindungselementes 2 und senkrecht zur Symmetrieachse S.

Im vorliegenden Ausführungsbeispiel ist die Zugzunge 5 mit dem Verbindungselement 2 einstückig ausgebildet. Vorzugsweise ist die Zugzunge 5 aus dem Grundkörper des von einem Blechstanzteil gebildeten Verbindungselementes 2 ausgestanzt.

Die Zugzunge 5 ist an ihrem der Symmetrieachse S zugewandten längsseitigen Ende über eine Schwächungsstruktur mit dem Grundkörper des Verbindungselementes 2 verbunden. Die Schwächungsstruktur ist von einer Perforation 6 gebildet, die längs einer parallel zur Symmetrieachse S verlaufenden Schwächungslinie 7 verläuft.

Damit kann die Zugzunge 5 bezüglich der Schwächungslinie 7 geschwenkt werden, so dass die Zugzunge 5 insbesondere wie in Figur 2 dargestellt zur Ebene des Verbindungselementes 2 geneigt ist.

Die Zugzunge 5 weist an ihrem freien Ende ein Kopfteil auf, in welchem eine Aufnahme 8 zur Führung eines Befestigungsmittels vorgesehen ist. Die Aufnahme 8 ist von einer Bohrung im Kopfteil gebildet. Das Befestigungsmittel ist von einer Schraube 9 gebildet. Der Durchmesser der Bohrung ist so bemessen, dass der Grundkörper der Schraube 9 durch die Bohrung geführt werden kann. Jedoch ist der Durchmesser des Kopfes 10 der Schraube 9 größer als der Durchmesser der Bohrung, so dass der Kopf 10 der Schraube 9 an den die Bohrung begrenzenden Rändern des Kopfteils gehalten ist. Alternativ können als Befestigungsmittel auch Nägel oder dergleichen vorgesehen sein.

Zwischen dem Kopfteil und dem Rumpf der Zugzunge 5 ist eine weitere Schwächungsstruktur vorgesehen, welche wiederum von einer Perforation 11 gebildet ist, die längs einer parallel zur Symmetrieachse S verlaufenden zweiten Schwächungslinie 12 verläuft. Prinzipiell kann die Zugzunge 5 auch weitere analoge Aufbiegungen aufweisen.

Das Verbindungselement 2 weist im Bereich der Zugzunge 5 eine Aussparung 13 auf. Die Kontur der Aussparung 13 ist an die Form der Zugzunge 5 angepasst, so dass die Zugzunge 5 bei horizontaler Lage in der Ebene des Verbindungselementes 2 vollständig in der Aussparung 13 liegt.

Zur Verbindung der beiden Werkstücke 1a, 1b werden diese wie insbesondere aus Figur 2 ersichtlich mit zwei Seitenflächen dicht aneinander gelegt, so dass deren Oberseiten als Grenzflächen eine ebene Auflagefläche für das Verbindungselement 2 bildet.

Dann wird das Verbindungselement 2 auf die Werkstücke 1a, 1b so aufgesetzt, dass deren Symmetrieachse S längs der Stoßkante zwischen den beiden Werkstücken 1a, 1b verläuft.

Daraufhin wird das erste Werkstück 1a an dessen rechts an die Symmetrieachse S anschließenden Teil des Verbindungselementes 2 fixiert. Hierzu werden nicht dargestellte Befestigungsmittel in Form von Schrauben oder Nägeln durch die Löcher 3 des Verbindungselementes 2 geführt und in das erste Werkstück 1a eingeschraubt oder eingeschlagen.

Anschließend wird das zweite Werkstück 1b an dem zweiten Teil des Verbindungselementes 2 vorfixiert. Hierzu werden nicht dargestellte Befestigungsmittel in die Langlöcher 4 des Verbindungselementes 2 eingeführt und in das Werkstück 1b eingetrieben. Vorzugsweise bestehen die Befestigungsmittel wiederum aus Schrauben 9 oder Nägeln 25.

In einem abschließenden Arbeitsschritt wird die Schraube 9 durch die Bohrung der Zugzunge 5 geführt, bis der Kopf 10 an den Rändern der Bohrung anliegt. Dann wird die Schraube 9 in das Werkstück 1b eingeschraubt, wobei der mit F gekennzeichnete Pfeil die Richtung anzeigt, in welche die Schraube 9 in das Werkstück 1b eingeschraubt wird.

Durch das Einschrauben der Schraube 9 wird die Zugzunge 5 gegen die Oberseite des Werkstückes 1b gezogen, wodurch das Werkstück 1b selbst gegen das andere Werkstück 1a gepresst und damit sicher fixiert wird.

Die Biegung des Kopfteils der Zugzunge 5 ist dabei an den Eintrittswinkel der Schraube 9 in das Werkstück 1b angepasst, wodurch das Einschrauben der Schraube 9 erleichtert wird.

Durch das schräge Einführen der Schraube 9 in das Werkstück 1b wird auch bei dünnen Werkstücken ein hinreichend langer Weg der Schraube 9 im Werkstück erhalten, wodurch auch in diesem Fall eine sichere Verbindung zwischen den Werkstücken 1a, 1b gewährleistet ist.

Prinzipiell kann die Schraube 9 auch wenigstens nahezu senkrecht in das Werkstück 1b eingeführt werden.

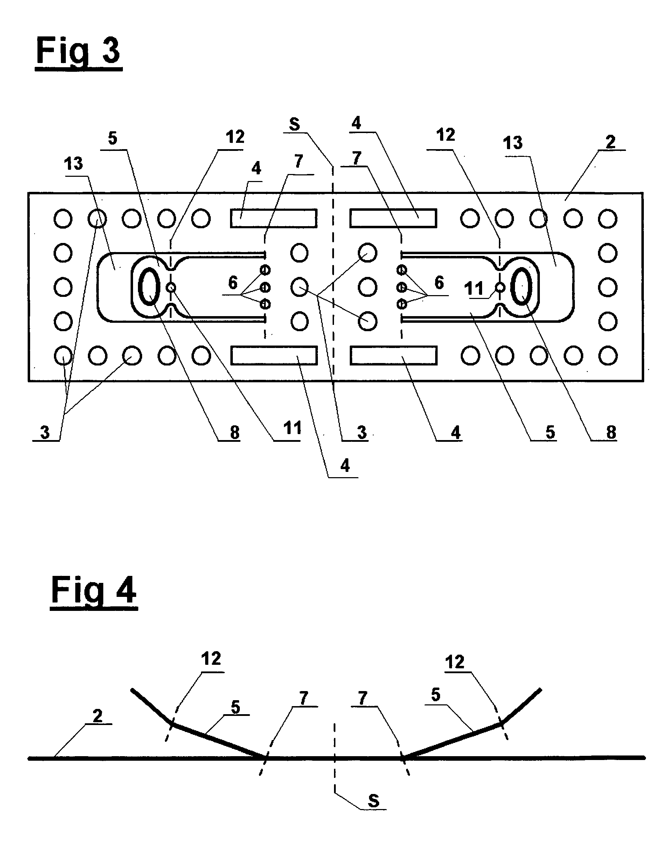

Die Figuren 3 und 4 zeigen ein zweites Ausführungsbeispiel der erfindungsgemäßen Vorrichtung zum Verbindung zweier Werkstücke 1a, 1b. In diesem Fall weist die Vorrichtung ein Verbindungselement 2 auf, die symmetrisch zur Symmetrieachse S ausgebildet ist. Die beidseits der Symmetrieachse S liegenden Teile des Verbindungselementes 2 weisen jeweils im Randbereich umlaufend angeordnete Löcher 3 zur Fixierung des Verbindungselementes 2 an einem Werkstück 1a, 1b auf.

Weiterhin weist jeder Teil des Verbindungselementes 2 jeweils zwei Langlöcher 4 zur Vorfixierung eines Werkstückes 1a, 1b auf. Die Geometrien und Anordnungen der Langlöcher 4 entsprechen dem Ausführungsbeispiel gemäß den Figuren 1 und 3.

Schließlich weist jeder Teil des Verbindungselementes 2 eine Zugzunge 5 auf. Die Ausbildung der einzelnen Zugzungen 5 sowie deren Anordnungen auf dem Verbindungselement 2 entsprechen dem Ausführungsbeispiel gemäß den Figuren 1 und 2.

Durch die symmetrische Ausbildung des Verbindungselementes 2 mit jeweils einer Zugzunge 5 auf den beiden Teilen des Verbindungselementes 2 können die Werkstücke 1a, 1b durch Betätigen beider Zugzungen 5 mittels der zugeordneten Befestigungsmittel symmetrisch gegeneinander gepresst werden.

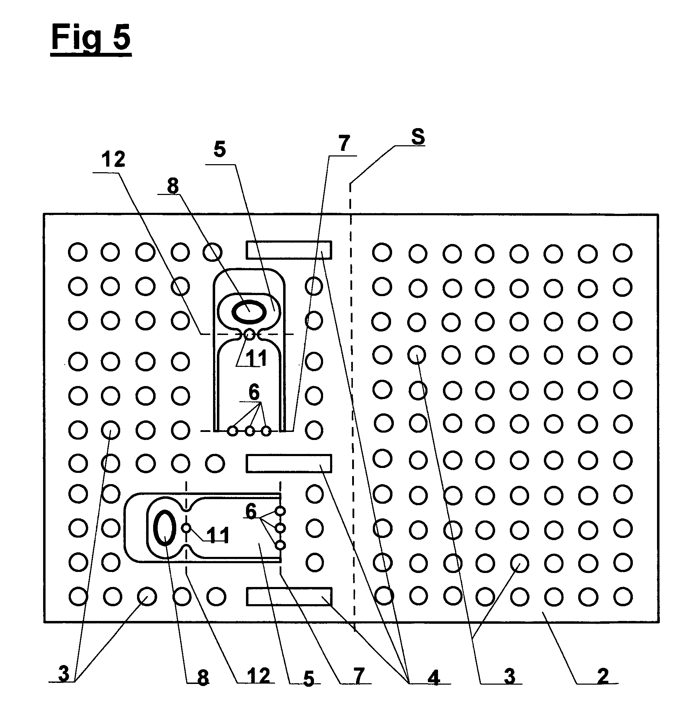

Figur 5 zeigt ein drittes Ausführungsbeispiel der erfindungsgemäßen Vorrichtung. Diese Ausführungsform stellt eine Erweiterung bezüglich des Ausführungsbeispiels gemäß den Figuren 1 und 2 dar.

Der rechts neben der Symmetrieachse S liegende Teil des Verbindungselementes 2 weist nur eine Anordnung von Löchern 3 auf und ist identisch mit dem entsprechenden Teil des Verbindungselementes 2 gemäß den Figuren 1 und 2.

Der zweite Teil des Verbindungselementes 2 weist drei Langlöcher 4 zur Vorfixierung von Werkstücken 1a, 1b auf. Die Längsachsen der Langlöcher 4 verlaufen wiederum senkrecht zur Symmetrieachse S.

Analog zu dem Ausführungsbeispiel gemäß den Figuren 1 und 2 ist auf dem zweiten Teil des Verbindungselementes 2 eine Zugzunge 5 angeordnet, deren Längsachse senkrecht zur Symmetrieachse S verläuft. Diese Zugzunge 5 dient wiederum zum Anpressen des zweiten Werkstückes 1b gegen das erste Werkstück 1a.

Weiterhin ist eine zweite Zugzunge 5 vorgesehen, welche einen zur ersten Zugzunge 5 identischen Aufbau aufweist. Jedoch verläuft die Längsachse der zweiten Zugzunge 5 parallel zur Symmetrieachse S. Diese zweite Zugzunge 5 dient zum Heben oder Senken des angekoppelten zweiten Werkstücks 1b und damit zu dessen Ausrichtung relativ zum ersten Werkstück 1a.

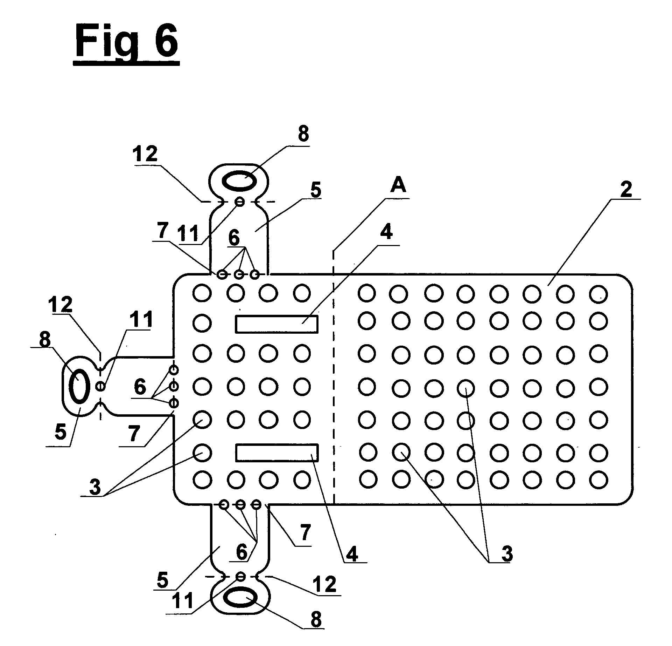

Figur 6 zeigt ein viertes Ausführungsbeispiel der erfindungsgemäßen Vorrichtung. Diese Vorrichtung weist ein längs einer Achse A asymmetrisch geteiltes Verbindungselement 2 auf. Das Verbindungselement 2 wird dabei derart auf die Werkstücke 1a, 1b aufgesetzt, dass die Achse A längs der Stoßkante zwischen den Werkstücken 1a, 1b verläuft.

Der rechts neben der Achse A liegende Teil des Verbindungselementes 2 weist nur eine Anordnung von Löchern 3 auf und entspricht dem jeweiligen Teil des Verbindungselementes 2 gemäß den Ausführungsbeispielen gemäß den Figuren 1, 2 und 5.

Der linke Teil des Verbindungselementes 2 weist neben einer flächigen Anordnung von Löchern 3 zwei Langlöcher 4 zur Vorfixierung des zweiten Werkstücks 1b auf. Die Längsachsen der Langlöcher 4 verlaufen senkrecht zur Achse A.

Weiterhin sind drei Zugzungen 5 vorgesehen, deren Aufbau der Zugzunge 5 gemäß den Figuren 1 und 2 entspricht.

Im Gegensatz zu den Ausführungsbeispielen gemäß den Figuren 1 - 5 schließen in diesem Fall die Zugzungen 5 an die Ränder des Verbindungselementes 2 an. Die Längsachse der Zugzunge 5 am längsseitigen Rand des Verbindungselementes 2 verläuft senkrecht zur Achse A. Diese Zugzunge 5 dient zum Anpressen des zweiten Werkstückes 1b an das erste Werkstück 1a. Die seitlich angeordneten Zugzungen 5 dienen zum Ausrichten des zweiten Werkstücks 1b relativ zum ersten Werkstück 1a.

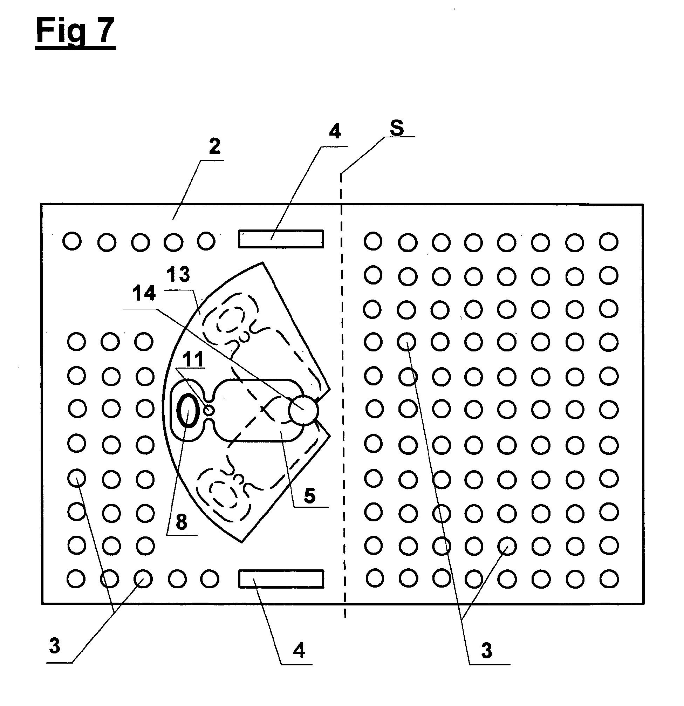

Figur 7 zeigt ein fünftes Ausführungsbeispiel der erfindungsgemäßen Vorrichtung. Diese Ausführungsform stellt eine Erweiterung bezüglich des Ausführungsbeispiels gemäß den Figuren 1 und 2 dar.

Der rechts an die Symmetrieachse S anschließende Teil des Verbindungselementes 2 entspricht dem Ausführungsbeispiel gemäß den Figuren 1 und 2.

Analog zu dem Ausführungsbeispiel gemäß den Figuren 1 und 2 weist der linke Teil des Verbindungselementes 2 zwei Langlöcher 4 sowie eine Anordnung von Löchern 3 auf.

An diesem Teil des Verbindungselementes 2 ist zudem eine Zugzunge 5 vorgesehen, deren Aufbau dem Ausführungsbeispiel gemäß den Figuren 1 und 2 entspricht. Jedoch ist in diesem Fall die Zugzunge 5 als separates Teil ausgebildet, welches über ein Gelenk 14 an das Verbindungselement 2 gekoppelt ist.

Durch das Gelenk 14 kann die Zugzunge 5 nicht nur in vertikaler Richtung bezüglich des in einer horizontalen Ebene angeordneten Verbindungselementes 2 geschwenkt werden. Weiterhin ist die Zugzunge 5 auch in der horizontalen Ebene des Verbindungselementes 2 schwenkbar. Die der Zugzunge 5 zugeordnete Aussparung 13 ist dabei an den Schwenkbereich angepasst. Durch eine geeignete Vorgabe des Schwenkwinkels in der horizontalen Ebene ist die Stellung der Zugzunge 5 variabel vorgebbar, so dass je nach Bedarf mit dieser allein ein Anpressen des zweiten Werkstücks 1b an das erste Werkstück 1a oder zusätzlich auch ein Ausrichten des zweiten Werkstücks 1b erreicht wird. Anstelle des Gelenks 14 kann die Zugzunge 5 auch über eine geeignete Schwächungsstruktur an das Verbindungselement 2 gekoppelt sein.

In einer Abwandlung der Ausführungsform gemäß Figur 7 ist die Zugzunge 5 als separates Teil ausgebildet, an deren unterem Ende ein Haken 21, 21' ? angeordnet ist. Mit diesem Haken 21, 21' ? kann die Zugzunge 5 an dem Verbindungselement 2 angebracht werden, so dass diese in wenigstens einer Ebene an dem Verbindungselement 2 geschwenkt werden kann.

In Erweiterung der in den Figuren 1-7 dargestellten Ausführungsformen können mit der erfindungsgemäßen Vorrichtung auch mehr als zwei Werkstücke miteinander verbunden werden.

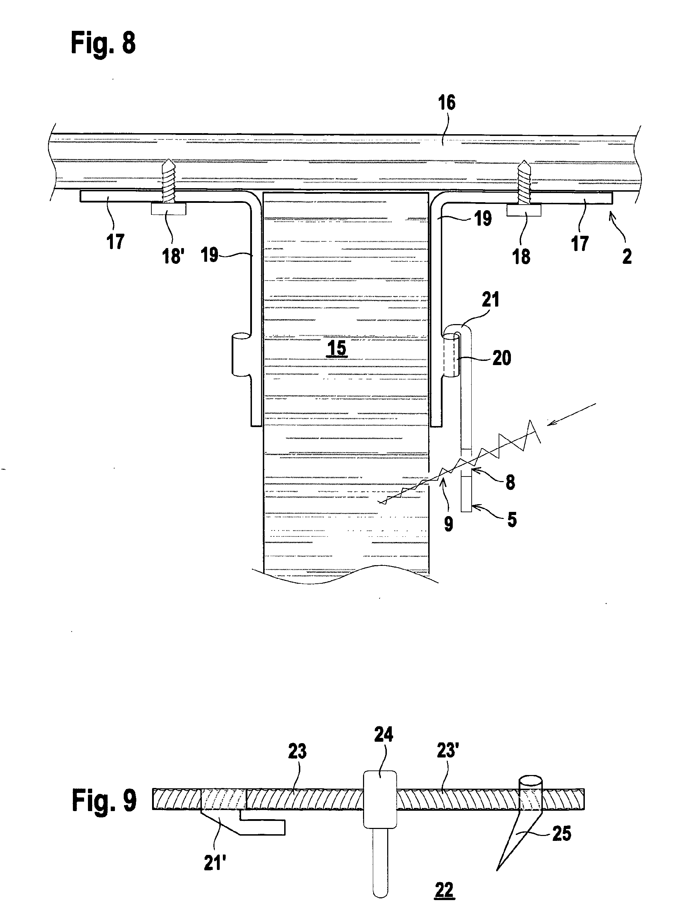

Figur 8 zeigt ein weiteres Ausführungsbeispiel der erfindungsgemäßen Vorrichtung. Das Verbindungselement 2 ist im vorliegenden Fall von einem Balkenschuh gebildet. Mit dem Balkenschuh wird ein Balken 15 an einer Unterlage montiert, wobei die Längsachse des Balkens 15 im rechten Winkel auf die ebene Oberfläche der Unterlage zuläuft. Im vorliegenden Fall ist die Unterlage von einem zweiten Balken 16 gebildet.

Der Balkenschuh ist als Blechteil ausgebildet und weist zwei rechtwinklig verlaufende Winkelsegmente zur Fixierung der Balken 15, 16 auf. Jeweils ein Schenkel der Winkelsegmente bildet ein Auflageelement 17, mit welchem der Balkenschuh an dem die Unterlage bildenden Balken 16 fixiert wird. Die Fixierung an der Unterlage erfolgt mittels Fixierschrauben 18, 18' oder Nägeln.

Die jeweils anderen Schenkel der Winkelsegmente bilden Führungen 19, zwischen welchen der Balken 15 im Balkenschuh geführt ist.

Um den Balken 15 vollständig gegen die Unterlage zu pressen und/oder bezüglich dieser auszurichten, ist wenigstens eine Zugzunge 5 am Balkenschuh vorgesehen. Prinzipiell kann diese mit dem Balkenschuh analog zum Ausführungsbeispiel gemäß Figur 1 oder über eine Gelenkverbindung verbunden sein.

Im vorliegenden Fall weist der Balkenschuh im Bereich der Führungen 19 Aufnahmen auf, in welchen die Zugzunge 5 angekoppelt werden kann. Im vorliegenden Fall sind die Führungen 19 von Laschen 20 gebildet. In eine derartige Lasche 20 kann die jeweilige Zugzunge 5 eingehängt werden. Die Zugzunge 5 weist hierzu am hinteren Ende einen Haken 21 oder eine ähnliche Aufnahme auf.

Die Laschen 20 stehen im vorliegenden Fall von den Oberseiten der Führungen 19 hervor. Prinzipiell können die Laschen 20 auch in die seitlichen Ränder der Führungen 19 eingearbeitet sein. Vorteilhaft hierbei ist, dass diese im Bedarfsfall an der Führung 19 nach oben gebogen werden können, so dass dann die Zugzunge 5 in die Lasche 20 eingehängt werden kann. Wird die Lasche 20 nicht benötigt, so kann diese mit einem Hammer in die Ebene der Führung 19 eingeschlagen werden.

Im vorliegenden Fall liegt die Zugzunge 5 auf der Führung 19 bzw. der Oberfläche des in dieser geführten Balkens 15 auf. Dabei verläuft die Längsachse der Zugzunge 5 parallel zur Längsachse des Balkens 15.

Prinzipiell kann die Zugzunge 5 auch analog zu dem Ausführungsbeispiel gemäß den Figuren 1 und 2 schräg nach oben vom Balken hervorstehen.

Zur Fixierung und Ausrichtung des Balkens 15 wird analog zu dem Ausführungsbeispiel eine Schraube 9 oder dergleichen durch eine Aufnahme 8 der Zugzunge 5 geführt und dann schräg in den Balken 15 eingetrieben, wobei die Spitze der Schraube 9 in Richtung des vorderen, der Unterlage abgewandeten Endes eingetrieben wird. Dadurch wird eine Zugkraft erzeugt, die die beiden Balken 15, 16 gegeneinander presst.

Figur 9 zeigt ein Ausführungsbeispiel eines Zugelements 22, welches für die Anordnung gemäß Figur 8 anstelle der Zugzunge 5 einsetzbar ist, welche ebenfalls ein Zugelement 22 bildet.

Das Zugelement 22 gemäß Figur 9 weist zwei gegenläufige Gewinde 23, 23' auf, die auf eine Rätsche 24 zulaufen. An einem längsseitigen Ende des Zugelements 22 ist ein Haken 21' vorgesehen. Am anderen längsseitigen Ende ist als Befestigungsmittel ein Nagel 25 vorgesehen. Alternativ kann das Zugelement 22 gemäß Figur 9 auch nur mit einem Gewinde 23' ausgerüstet sein, welches in den Nagel 25 greift.

Das Zugelement 22 wird mit dem Haken 21' in eine Lasche 20 des Balkenschuhes eingehängt. Dann wird der Nagel 25 des Zugelements 22 in den Balken 15 eingeschlagen, wodurch das Zugelement 22 am Balken 15 und am Balkenschuh fixiert ist. Durch Betätigung der Rätsche 24 wird durch das Zugelement 22 der Balken 15 gegenüber dem Balkenschuh verschoben und so gegenüber dem Balken 16 ausgerichtet und fixiert.

### Bezugszeichenliste

- (1a): Werkstück
- (1b): Werkstück
- (2): Verbindungselement
- (3): Loch
- (4): Langloch
- (5): Zugzunge
- (6): Perforation
- (7): Schwächungslinie
- (8): Aufnahme
- (9): Schraube
- (10): Kopf
- (11): Perforation
- (12): Schwächungslinie
- (13): Aussparung
- (14): Gelenk
- (15): Balken
- (16): Balken
- (17): Auflageelement
- (18): Fixierschraube
- (18'): Fixierschraube
- (19): Führung
- (20): Lasche
- (21): Haken
- (21'): Haken
- (22): Zugelement
- (23): Gewinde
- (23'): Gewinde
- (24): Rätsche
- (25): Nagel

- (A): Achse
- (S): Symmetrieachse

## Patentansprüche

1. Vorrichtung zum Verbinden wenigstens zweier Werkstücke (1a, 1b) mit einem Verbindungselement (2), wenigstens einer Zugzunge (5), welche mit ihrem einen Ende beweglich mit dem Verbindungselement (2) verbunden ist, und mit wenigstens einem mit der Zugzunge (5) in Wirkverbindung stehenden Befestigungsmittel, wobei das Verbindungselement (2) auf aneinander anschließende Grenzflächen der Werkstücke (1a, 1b) aufsetzbar ist, so dass bei einem am ersten Werkstück (1a) fixierten ersten Teil des Verbindungselementes (2) das freie Ende der Zugzunge (5), welches von dem auf dem zweiten Werkstück (1b) aufliegenden Teil des Verbindungselementes (2) hervorsteht, durch Fixieren des Befestigungsmittels am zweiten Werkstück (1b) in Richtung des Verbindungselementes (2) gedrückt wird, wodurch das zweite Werkstück (1b) gegen das erste Werkstück (1a) gepresst wird und/oder bezüglich diesem ausgerichtet wird.

2. Vorrichtung nach Anspruch 1, **dadurch gekennzeichnet, dass** die Zugzunge (5) an ihrem freien Ende eine Aufnahme (8) zur Führung des Befestigungsmittels aufweist.

3. Vorrichtung nach Anspruch 2, **dadurch gekennzeichnet, dass** die Aufnahme (8) von einer die Zugzunge (5) durchsetzenden Bohrung gebildet wird, durch welche das von dem als Schraube (9) oder Nagel (25) ausgebildeten Befestigungsmittel geführt ist.

4. Vorrichtung nach einem der Ansprüche 1 - 3, **dadurch gekennzeichnet, dass** die Zugzunge (5) mit dem Verbindungselement (2) gelenkig verbunden ist.

5. Vorrichtung nach Anspruch 4, **dadurch gekennzeichnet, dass** die gelenkige Verbindung zwischen der Zugzunge (5) und dem einstückig mit dieser ausgebildeten Verbindungselement (2) von einer Schwächungsstruktur gebildet ist.

6. Vorrichtung nach Anspruch 5, **dadurch gekennzeichnet, dass** die Schwächungsstruktur von einer Perforation (6) in dem Verbindungselement (2) gebildet ist.

7. Vorrichtung nach Anspruch 4, **dadurch gekennzeichnet, dass** die Zugzunge (5) und das Verbindungselement (2) mehrstückig ausgebildet und über ein Gelenk (14) verbunden sind.

8. Vorrichtung nach einem der Ansprüche 1 - 7, **dadurch gekennzeichnet, dass** die Zugzunge (5) ein- oder mehrfach aufgebogen ist, wobei die oder jede Biegelinie quer zur Längsachse der Zugzunge (5) verläuft.

9. Vorrichtung nach Anspruch 8, **dadurch gekennzeichnet, dass** die Zugzunge (5) ein Kopfteil aufweist, in welchem die Aufnahme (8) für das Befestigungsmittel vorgesehen ist, wobei das Kopfteil gegenüber dem anschließenden Körper der Zugzunge (5) aufgebogen ist.

10. Vorrichtung nach einem der Ansprüche 1 - 9, **dadurch gekennzeichnet, dass** der oder wenigstens einer Zugzunge (5) eine Aussparung (13) in dem Verbindungselement (2) zugeordnet ist, wobei die Zugzunge (5) in der Ebene des Verbindungselementes (2) liegend vollständig in der Aussparung (13) liegt.

11. Vorrichtung nach einem der Ansprüche 1 - 10, **dadurch gekennzeichnet, dass** die oder wenigstens eine Zugzunge (5) an den Rand des Verbindungselementes (2) anschließt.

12. Vorrichtung nach einem der Ansprüche 1 - 11, **dadurch gekennzeichnet, dass** bei auf den Werkstücken (1a, 1b) aufliegendem Verbindungselement (2) die Längsachse der oder wenigstens einer Zugzunge (5) im rechten Winkel zur Stoßkante zwischen den Werkstücken (1a, 1b) verläuft, wobei das freie Ende der Zugzunge (5) der Stoßkante abgewandt ist.

13. Vorrichtung nach Anspruch 12, **dadurch gekennzeichnet, dass** diese wenigstens eine zweite Zugzunge (5) aufweist, deren Längsachse bei auf den Werkstücken (1a, 1b) aufliegendem Verbindungselement (2) parallel zur Stoßkante zwischen den Werkstücken (1a, 1b) verläuft.

14. Vorrichtung nach einem der Ansprüche 1 - 13, **dadurch gekennzeichnet, dass** diese wenigstens eine Zugzunge (5) aufweist, welche über ein Gelenk (14) mit dem Verbindungselement (2) derart verbunden ist, dass bei auf den Werkstücken (1a, 1b) aufliegendem Verbindungselement (2) die Zugzunge (5) in der Ebene des Verbindungselementes (2) schwenkbar ist.

15. Vorrichtung nach einem der Ansprüche 1 - 14, **dadurch gekennzeichnet, dass** diese mehrere Zugzungen (5) aufweist, welche auf einem Teil des Verbindungselementes (2) angeordnet sind, welcher nur auf eines der Werkstücke (1a, 1b) aufsetzbar ist.

16. Vorrichtung nach einem der Ansprüche 1 - 15, **dadurch gekennzeichnet, dass** diese mehrere Zugzungen (5) aufweist, welche auf beiden Teilen des auf den Werkstücken (1a, 1b) liegenden Verbindungselementes (2) angeordnet sind.

17. Vorrichtung nach einem der Ansprüche 1 - 16, **dadurch gekennzeichnet, dass** das Verbindungselement (2) mehrere Löcher (3) und/oder Schlitze aufweist, wobei zur Fixierung des Verbindungselementes (2) an den Werkstücken (1a, 1b) Befestigungsmittel die Löcher (3) und/oder Schlitze durchsetzen und in das jeweilige Werkstück (1a, 1b) greifen.

18. Vorrichtung nach Anspruch 17, **dadurch gekennzeichnet, dass** die Befestigungsmittel von Schrauben (9) und/oder Nägeln (25) gebildet sind.

19. Vorrichtung nach einem der Ansprüche 1 - 18, **dadurch gekennzeichnet, dass** das Verbindungselement (2) von Langlöchern (4) durchsetzt ist, wobei bei auf den Werkstücken (1a, 1b) aufliegendem Verbindungselement (2) die Längsachsen der Langlöcher (4) senkrecht zur Stoßkante zwischen den Werkstücken (1a, 1b) verlaufen.

20. Vorrichtung nach Anspruch 19, **dadurch gekennzeichnet, dass** die Langlöcher (4) auf dem Teil des Verbindungselementes (2) angeordnet sind, auf welchem wenigstens eine Zugzunge (5) vorgesehen ist.

21. Vorrichtung nach Anspruch 19 oder 20, **dadurch gekennzeichnet, dass** die Langlöcher (4) im Bereich der längsseitigen Ränder des Verbindungselementes (2) verlaufen.

22. Vorrichtung nach Anspruch 21, **dadurch gekennzeichnet, dass** die Langlöcher (4) symmetrisch zur Längsachse des Verbindungselementes (2) angeordnet sind.

23. Vorrichtung nach einem der Ansprüche 19 - 22, **dadurch gekennzeichnet, dass** mittels die Langlöcher (4) durchsetzender Befestigungsmittel ein Werkstück (1a oder 1b) an dem Verbindungselement (2) vorfixierbar ist.

24. Vorrichtung nach Anspruch 23, **dadurch gekennzeichnet, dass** die Befestigungsmittel von in das Werkstück (1a oder 1b) greifenden Nägeln (25) und/oder Schrauben (9) gebildet sind.

25. Vorrichtung zum Verbinden wenigstens zweier Werkstücke (1a, 1b) mit einem Verbindungselement (2), wenigstens einem Zugelement (22), welches mit einem Ende beweglich mit dem Verbindungselement (2) verbunden ist, und mit wenigstens einem mit dem Zugelement (22) in Wirkverbindung stehendem Befestigungsmittel, welches an einem der Werkstücke (1a, 1b) fixierbar ist, **dadurch gekennzeichnet, dass** das Verbindungselement (2) von einem Balkenschuh gebildet ist.

26. Vorrichtung nach Anspruch 25, **dadurch gekennzeichnet, dass** das Zugelement (22) von einer Zugzunge (5) gebildet ist.

27. Vorrichtung nach einem der Ansprüche 25 oder 26, **dadurch gekennzeichnet, dass** der Balkenschuh wenigstens eine Aufnahme aufweist, an welcher ein Zugelement (22) anbringbar ist.

28. Vorrichtung nach Anspruch 27, **dadurch gekennzeichnet, dass** die Aufnahme von einer Lasche (20) gebildet ist.

29. Vorrichtung nach einem der Ansprüche 27 oder 28, **dadurch gekennzeichnet, dass** die Aufnahme vorgearbeitet, insbesondere in den Balkenschuh eingestanzt ist, und bei Bedarf am Balkenschuh aufbiegbar ist.
